# EUROPÄISCHE PATENTSCHRIFT

(11) **EP 2 433 771 B1**
(45) Veröffentlichungstag und Bekanntmachung des Hinweises auf die Patenterteilung: **21.12.2016**
(21) Anmeldenummer: 10011282.0
(22) Anmeldetag: 28.09.2010
(51) Int. Cl.: B29B 9/16, C08G 63/88, B29B 9/06, B29K 67/00

(54) **Verfahren zur Erhöhung des Molekulargewichts unter Nutzung der Restwärme von Polyestergranulat**
Method for increasing molecular weight using the residual heat of polyester granulate
Procédé d'augmentation du poids moléculaire en utilisant la chaleur résiduelle de granulés de polyester

(43) Veröffentlichungstag der Anmeldung: 28.03.2012
(73) Patentinhaber: Uhde Inventa-Fischer GmbH, 13509 Berlin (DE)
(72) Erfinder: Hanimann, Kurt, 7415 Rodels/Pratval (CH); Schaller, Rainer, Dr., 86637 Wertingen (DE); Schulz Van Endert, Eike, 13467 Berlin (DE)
(74) Vertreter: Pfenning, Meinig & Partner mbB

(56) Entgegenhaltungen:
- DE-A1-102006 012 587
- DE-A1-102006 025 942
- DE-A1-102006 027 176
- DE-A1-102007 040 135
- US-A1- 2006 047 103
- US-A1- 2008 293 912
- US-B1- 7 250 486

## Beschreibung

Die vorliegende Erfindung betrifft die Erhöhung des Molekulargewichts bei einer thermischen Behandlung von Polyester in Kombination mit einer Latentwärmegranulierung. Mit dem neu entwickelten Verfahren kann eine Festphasennachkondensation (SSP = Solid State Postcondensation) direkt mit einer Unterwassergranulierung kombiniert werden. Das Verfahren unterscheidet sich von einer konventionellen Festphasennachkondensation dadurch, dass ohne zusätzlichen Wärmeeintrag und somit nur durch Nutzung der Restwärme und der anfallenden Kristallisationswärme eine Erhöhung des Molekulargewichts möglich ist. Kennzeichnendes Element ist eine verbesserte Wasserabscheidung und Entfeuchtung bei der Granulierung. Nur so ist auch bei kleinem Granulat mit weniger als 20 mg mittlerem Korngewicht ein Viskositätsanstieg möglich.

Typisch für Festphasennachkondensationsanlagen für Polyester ist bisher, dass nach der Wasserabscheidung der Granulierung nochmals eine Trocknung und Kristallisation mit Wärmezufuhr vorgesehen wird, um die benötigte Reaktionstemperatur zu erreichen und einen Abbau durch Hydrolyse zu verhindern.

Polyester wird in der Regel in einer Schmelzephase bei 275 bis 300 °C Endtemperatur unter Vakuum hergestellt. Das Produkt wird direkt als Schmelze verwertet oder zu Granulat verarbeitet und so für die Weiterverarbeitung über einen Aufschmelzextruder zur Verfügung gestellt. Je nach Gebrauch werden unterschiedliche Qualitätsanforderungen gestellt, vor allem bezüglich der i.V.

Für die Weiterverarbeitung zu Flaschen, Folien oder technischen Garnen werden höhere Festigkeiten als in der Synthesefaserindustrie gefordert. Der zusätzlich gewünschte Viskositätsaufbau kann in einer gegenüber der bei Faserrohstoffen üblichen verlängerten Polykondensation in der Schmelzephase selbst oder in einer Festphasennachkondensation erfolgen. Bei der Festphasennachkondensation wird ein Granulat nochmals getrocknet und aufgeheizt und dann im Vakuum oder in einem Gasstrom bei Temperaturen von 200 bis 225 °C polykondensiert. Vakuum oder ein Gasstrom werden für den Reaktionsfortschritt benötigt, um die entstehenden Nebenprodukte (Äthylenglykol, Wasser sowie andere leicht flüchtige, organische Stoffe) abzuführen.

In der US 4,064,112 wird die thermische Schädigung beschrieben, die sich früher bei der Schmelzekondensation bei einer intrinsischen Viskosität von mehr als 0.7 einstellte. Das heute weitverbreitete Verfahren einer Festphasennachkondensation in einem Inertgasstrom im Schachtreaktor bei ca. 220°C wird beschrieben. Ebenso ist offenbart, wie das Restwasser aus der Granulierung oder durch Hygroskopie vom Polyester aufgenommenes Wasser entfernt werden muss. Dazu wird vor der Festphasennachkondensation eine Trocknung installiert. Weiterhin ist beschrieben, wie die beim Aufheizen sich einstellende Verklebung bei der Kristallisation durch Bewegung vermieden werden muss. US 4,064,112 betrifft auch die Entfernung von Leichtflüchtigen Nebenprodukten in einer Festphasennachkondensation (Dealdehydisierung).

In EP 1 608 696 wird die Latentwärmekristallisation beschrieben. Bei diesem Verfahren wird das Granulat nur so weit gekühlt, dass nach der Entfernung des Kühlwassers mit einer Rührzentrifuge die im Korn verbleibende inhärente Wärme direkt zur Kristallisation verwendet werden kann. Ziel ist es, mit einer der Rührzentrifuge nachgeschalteten Rüttelrinne Verklebungen zu vermeiden. Das Verfahren dient dazu, einen angestrebten Kristallisationsgrad für die Weiterverarbeitung zu erreichen. Es zeigte sich später, dass auch ohne Rüttelbett keine Verklebungen auftreten (vgl. DE 103 49 016 mit der später folgenden DE 10 2006 013 062).

In einem weiteren Schritt zur Prozessintensivierung wird in WO 2006/06030 ein Verfahren dargestellt, bei dem in einer Schmelzepolykondensation hohe IV erreicht wird, wobei durch geschickte Prozessführung ein tiefer Gehalt an Azetaldehyd erreicht wird. Damit konnte erstmals Flaschengranulat im industriellen Maßstab ohne Festphasennachkondensation hergestellt werden. Für dieses neue sogenannte Melt-To-Resin-Verfahren (MTR®) wurde die Latentwärmegranulierung eingesetzt. Neu wurde die im Granulat verbleibende inhärente Wärme und die generierte Kristallisationswärme direkt genutzt zur Reduktion des Acetaldehydgehalts durch eine thermische Behandlung mit Luft bei 175°C. Ein Viskositätsanstieg wurde nicht angestrebt.

In der US 7,674,878 ist ein Latentwärmegranulierverfahren beschrieben, bei dem durch eine Schockkühlung ein nichtklebendes Granulat für eine Weiterverarbeitung auf einem kontrollierten Temperaturniveau zur Verfügung gestellt wird.

Ein Viskositätsabbau durch Feuchte nach der Rührzentrifuge in dem oben beschriebenen MTR®-Verfahren muss vermieden werden. Das Resultat einer weiteren Entwicklung ist in WO 2009/027 064 festgehalten. Darin wird eine verbesserte Rührzentrifuge vorgestellt, die sich durch einen tangentialen Eintritt des Granulat-Wasser-Gemischs in die Rührzentrifuge auszeichnet. Der Durchmesser der Rührzentrifuge ist nach oben erweitert. Nach der Hauptentwässerung im unteren Teil wird das Restwasser mit erhöhtem Durchmesser abgeschleudert. Der Dampfabzug wird durch zentral eingespeiste Luft unterstützt. Auch am Granulataustritt und den folgenden Silos wird trockene Luft im Gegenstrom gefahren, um das Mitschleppen von Feuchte in die thermische Weiterverarbeitung (Dealdehydisierung) zu vermeiden. Ein Viskositätsabbau durch Hydrolyse kann so weitgehend vermieden werden.

In der US 5,292,865 sind wesentliche Elemente eines Verfahrens mit Schmelzepolykondensation und Dealdehydisierung beschrieben. Die Behandlung mit trockener Luft und ein sich dabei einstellender Viskositätsanstieg bei 170 bis 185°C bei einer Behandlungszeit von 10 bis 12 Stunden sind festgehalten. Außerdem wird ein Latentwärmekristallisationsverfahren beschrieben, bei welchem das bei andern Kristallisationsverfahren problematische Verkleben nicht auftritt. Die für die industrielle Nutzung entscheidende Darstellung einer temperaturkontrollierten Latentwärmekristallisation, welche auch für kleines Korn ein optimales Betriebsfenster für die Dealdehydisierung zulässt, ist in diesem Patent aber nicht beschrieben. Das Granulat muss nach diesem Verfahren erst aufwändig getrocknet werden, damit ein Viskositätsaufbau stattfindet, der den Viskositätsabbau durch Hydrolyse überwiegt.

Die DE 10 2006 027 176 A1 betrifft ein Verfahren zur Herstellung eines Granulates mit geringem Acetaldehydgehalt und verbesserten Verarbeitungseigenschaften aus einer hochviskosen Polyesterschmelze, wobei der Polyesterschmelzestrang unter Wasser bei möglichst hoher Temperatur zerteilt wird, das begleitende Wasser unter möglichst geringer Abkühlung des Granulates vom Granulat getrennt wird, das so erhaltene wasserarme Granulat nach der Wasserabtrennung direkt in einen Dealdehydisierungsbehälter gegeben wird und das Granulat im Dealdehydisierungsbehälter mittels eines Spülluftstroms behandelt wird sowie eine Vorrichtung zur Durchführung dieses Verfahrens.

Aus der US 7,250,486 B1 ist ein Verfahren und eine Vorrichtung zur Verhinderung des Verlustes von Wärme während des Formens und Kristallisierens von Polymerpartikeln in einer Flüssigkeit bekannt.

Die DE 10 2007 040 135 A1 betrifft ein Verfahren zur kontinuierlichen Herstellung von Polyester-Granulaten aus hochviskosen Polyester-Schmelzen, das sich dadurch auszeichnet, dass der Abfall des Polykondensationsgrades ausgehend von der Polyester-Schmelze zum Polyester-Granulat weniger als 2% beträgt. Die Erfindung betrifft weiterhin ein Polyester-Granulat, das mit diesem Verfahren hergestellt wird, sowie eine Vorrichtung zur Herstellung des Granulates.

Die DE 10 2006 025 942 A1 betrifft ein Verfahren zur kontinuierlichen Herstellung von hochmolekularen Polyestern durch Veresterung von Dicarbonsäuren und/oder Umesterung von Dicarbonsäureestern mit Diolen und/oder deren Mischungen in Gegenwart von Katalysatoren unter Bildung eines Vorpolymers in einem Turmreaktor und dessen Polykondensation zu einem hochmolekularen Polyester in einem Polykondensationsreaktor, wobei in dem Turmreaktor ein Vorpolymer mit > 40 bis 70 Wiederholungseinheiten (DP) hergestellt und dieses Vorpolymer in nur einem weiteren Reaktor zu einem Polyester mit > 150 bis 205 DP polykondensiert wird.

Aus der US 2008/0293912 A1 sind Polyesterzusammensetzungen mit hoher Viskosität und niedrigem Acetaldehydgehalt bekannt, die ohne die Durchführung einer Festphasennachkondensation erhältlich sind.

Die DE 10 2006 012 587 A1 betrifft ein Verfahren zur Herstellung von kristallisierten Polyestern mit oder ohne anschließende Festphasenpolykondensation zur Herstellung von Flaschen, Folien, Filmen und hochfesten technischen Fäden bzw. mit oder ohne anschließende Dealdehydisierung zur Herstellung von Flaschen, Folien, Filmen und hochfesten technischen Fäden.

Die US 2006/0047103 A1 betrifft ein Verfahren zur Reduktion des Acetaldehydgehaltes in Polyestern durch Behandlung eines Polyestergranulats in einem Bett der Partikel.

Den etablierten Verfahren müssen aber diverse wirtschaftliche und qualitative Nachteile zugeschrieben werden:

### 1. Thermischer Stress in der Schmelzenachkondensation

Mit höherer i.V. steigt auch die Schmelzeviskosität in den Polykondensationsreaktoren. Der Schmelzefluss und vor allem die Oberflächenbildung und damit das Abführen der Nebenprodukte werden erschwert. Als Folge müssen höhere Temperaturen oder lange Verweilzeiten vorgesehen werden. Damit werden Abbaureaktionen gefördert, die dem Viskositätsaufbau entgegenlaufen und zu Materialverlusten führen.

### 2. Energie- und Investitionsaufwand in der SSP

Das Vorprodukt in Form eines Granulats muss getrocknet und aufgeheizt werden. Dabei kristallisiert das Produkt und aufwändige, mechanisch bewegte Zwischenstufen müssen vorgesehen werden, um das bei der Kristallisation ausgelöste Verkleben der Granulatkörner zu unterbinden. Die Behandlung in Wirbelbetten führt zu Staubbildung und verlangt für einen stabilen Betrieb entsprechende Filteranlagen.

### 3. Thermooxidative Schädigung des Granulats bei einer SSP

Nach herkömmlichen Erfahrungen setzt die Festphasennachkondensation in einem Gasstrom spürbar erst ab ca. 180 °C ein, wo jedoch bei Verwendung von Luft bereits mit einer beginnenden oxidativen Schädigung zu rechnen ist. Bei niedrigeren Temperaturen (ca. 160°C) könnte mit entsprechend langen Reaktionszeiten eine Feststoffkondensation auch mit Luft durchgeführt werden. In der Praxis werden allerdings, um über eine Beschleunigung der Reaktion große Apparate zu vermeiden, wesentlich höhere Temperaturen gefahren, wobei dann auf jeden Fall ein Inertgas eingesetzt werden muss: Ab ca. 190 °C führt der Sauerstoffanteil der Luft zu deutlich sichtbaren Qualitätseinbußen; andererseits sind Inertgase teuer und müssen rezirkuliert werden. Dazu müssen über aufwändige Reinigungsanlagen Sauerstoff und anfallende Nebenprodukte entfernt werden.

### 4. Abbau des Molekulargewichts durch Hydrolyse

Polyester ist hygroskopisch und nimmt bei der Granulierung oder bei der Lagerung in einer Luftatmosphäre Feuchte auf. Vor einer Weiterverarbeitung muss das Material deshalb getrocknet werden, in der Regel in einem Festbett oder einem Wirbelbett mit Luft oder einem Inertgas. Die Restfeuchte im Granulat, aber auch die Feuchte der Trocknungsluft oder in einem Inertgaskreislauf führt zu Hydrolyse und damit zu einem Viskositätsabbau.

### 5. Hydrolyse bei der Wiederverwendung von rezyklierten PET-Flaschen in neuen Getränkeflaschen

Nach Gebrauch werden PET-Flaschen gesammelt, sortiert, gewaschen und zu Flocken gemahlen. Für die Wiederverwendung müssen Restverschmutzungen ausgetrieben werden. Dazu wird das Material unter Vakuum oder Inertgasen thermisch behandelt. Restfeuchte führt zu Hydrolyse und somit einem Viskositätsabbau. Zur Wiederverwendung dieses Materials in neuen Flaschen muss diese Viskosität wieder aufgebaut werden.

Problematisch bei dem zuvor genannten Herstellungsverfahren von Polyesterpellets, insbesondere bei den bereits bekannten Latentwärmekristallisationsverfahren, ist insbesondere, dass bei den aus den aus dem Stand der Technik bekannten Verfahrensführungen während der Kristallisation der Pellets stets ein Abbau der intrinsischen Viskosität und somit des Molekulargewichts des eingesetzten Polyesters bis zu einem gewissen Grad zu beobachten war. Für den Fall, dass einem derartigen Abbau des Molekulargewichts des Polyestergranulats entgegengewirkt werden sollte, war daher stets zwingend eine weitere nachgeschaltete Festphasennachkondensation vonnöten.

Aufgabe der vorliegenden Erfindung ist es daher, die aus dem Stand der Technik bekannten Kristallisationsverfahren derart weiterzubilden, dass ein Abbau der intrinsischen Viskosität des eingesetzten Polyestergranulats vermieden wird.

Diese Aufgabe wird mit den Merkmalen des Patentanspruchs 1 gelöst, wobei die abhängigen Patentansprüche vorteilhafte Ausführungsformen des erfindungsgemäßen Verfahrens darstellen.

Erfindungsgemäß wird somit ein Verfahren zur Herstellung eines nicht-klebenden Polyestergranulats angegeben, bei dem
a) ein Polyesterrohmaterial als Schmelze durch eine Düse gepresst, in einem Kühlwasserstrom granuliert und nach Durchlaufen einer Kühlwasserstrecke vom Kühlwasserstrom abgetrennt wird, und
b) das in Schritt a) erhaltene Granulat in direktem Anschluss an Stufe a) einer thermischen Trocknung und Nachbehandlung durch Beaufschlagung des Granulats mit einem Gasstrom eines Gases oder Gasgemisches unterzogen wird, wobei das Granulat während der Nachbehandlung durch eine Konditioniereinrichtung geführt wird,
wobei während Schritt b) weder das eingesetzte Granulat noch das zugeführte Gas oder Gasgemisch des Gasstroms durch externen Energieeintrag erwärmt werden. Kennzeichnendes Element der vorliegenden Erfindung ist, dass die Verweilzeit des Granulats in Stufe b) zwischen 1 und 30 Stunden eingestellt wird.

Das Verfahren kombiniert ein Unterwassergranulierverfahren mit einer thermischen Behandlung in einem Gasstrom und zeichnet sich durch eine verbesserte Wasserabscheidung und Entfeuchtung zwischen Granulierung und thermischer Behandlung aus. Nach der Wasserabscheidung beträgt die Restfeuchte bevorzugt weniger als 200 ppm bezogen auf das Granulatgewicht. Das Verfahren zeichnet sich weiter dadurch aus, dass dem Granulat und dem Gasstrom für die Wasserabscheidung und die thermische Behandlung keine Wärme zugeführt wird, und die thermische Behandlung bevorzugt bei mehr als 165°C durchgeführt wird.

Völlig überraschenderweise wurde festgestellt, dass bei einer gemäß Patentanspruch 1 vorgeschlagenen Verfahrensführung während des Kristallisationsprozesses eine direkte Erhöhung des Molekulargewichts des derart in Stufe b) eingesetzten Polyestergranulats zu beobachten ist. Hierbei wird die dem Polyestergranulat enthaltene Restwärme genutzt, um gleichzeitig eine Nachkondensation bei gleichzeitiger Kristallisation des Granulats auszuführen. Die erhaltenen Polyestergranulate sind daher nicht nur nicht-klebend, sondern weisen auch - verglichen mit der intrinsischen Viskosität nach Stufe a), d.h. der Heißwassergranulierung - eine höhere intrinsische Viskosität auf.

Gemäß dem erfindungsgemäßen Verfahren kann ein Viskositätsaufbau von bis zu 0,30 dl/g nach dem ASTM-Messverfahren im Vergleich zur eingesetzten Schmelze erreicht werden. Bevorzugt beträgt der Viskositätsaufbau dabei minimal 0,02 dl/g.

Mit dem neuen Verfahren ist es möglich, mit der Restwärme direkt die für die Nachkondensation geforderte Restfeuchte und Reaktionstemperatur zu erreichen. Die Kombination einer Latentwärmegranulierung mit verbesserter Wasserabscheidung und Entfeuchtung mit einer thermischen Behandlung sei fortan "Restwärmenachkondensation" oder "thermische Behandlung" genannt. Dabei kann der Aufbau des Molekulargewichts von untergeordneter Bedeutung sein, wenn die thermische Behandlung andern Zwecken wie einer Dealdehydisierung oder Dekontamination dient.

Mit dem hier verwendeten Begriff Polyester sind neben Polyethylenterephthalat auch die verwandten Co-Polymere gemeint, bei deren Herstellung ein Teil der Monomere (Ethylenglykol & Terephthalsäure) durch andere Diole oder Dicarbonsäuren ersetzt werden.

Die intrinsische Viskosität (I.V.) wird erfindungsgemäß als Kenngröße für das Molekulargewicht benutzt. Höhere I.V. und somit längere Moleküle stehen für höhere Festigkeit. Weil in der Fachwelt diverse Viskositätsmessmethoden verwendet werden, sei hier immer die intrinsische Viskosität gemessen nach dem ASTM-Verfahren verwendet (I.V. nach ASTM). Die I.V. des eingesetzten Granulats kann dabei typischerweise zwischen 0,62 und 0,90, bevorzugt zwischen 0,70 und 0,80 betragen.

Bei der Unterwassergranulierung wird das Granulat durch einen sehr kurzen Kontakt mit Wasser auf hohem Temperaturniveau, nämlich oberhalb des Glasumwandlungspunktes, gehalten (Schockkühlung). Das Wasser wird in einer Rührzentrifuge schnell abgeschieden und das Restwasser vor allem durch die aus dem Kern nachströmende Wärme abgedampft. Trotz sofort einsetzender Kristallisation stellen sich keine Verklebungen ein und das Granulat kann dank inhärenter Wärme ohne zusätzlichen Wärmeeintrag zum Produkt direkt thermisch weiter verarbeitet werden. Die anfallende Kristallisationswärme hilft zusätzlich zur Temperaturerhöhung.

Mit dem neu entwickelten Verfahren einer Restwärmenachkondensation wird eine thermische Behandlung möglich, bei der die dargestellten Nachteile reduziert oder ganz überwunden werden können.

Die Erfindung bringt zusätzlich zum Viskositätsaufbau folgende Vorteile:
- Für eine Schmelzphasenpolykondensation wird es möglich, mit einer tieferen Austrittsviskosität zu fahren. Die Reaktion kann bei tieferer Temperatur durchgeführt werden. Daraus ergibt sich eine Qualitätsverbesserung durch eine Reduktion der thermischen Schädigung.
- Für eine Schmelzphasenpolykondensation mit tieferer Austrittviskosität sind kürzere Verweilzeiten möglich. Damit ergibt sich bei gleich großen Reaktoren ein höherer Durchsatz.
- Die Restwärmenachkondensation kann im Vergleich mit einer konventionellen SSP ohne zusätzliche mechanisch bewegte Trocknung oder Kristallisation betrieben werden. Investitionskosten und Energieaufwand sind kleiner. Der Materialverlust durch Staubentwicklung ist kleiner.
- Die Restwärmenachkondensation kann im Vergleich mit einer konventionellen SSP mit einem kleineren Gasstrom betrieben werden.
- Bei einer Dealdehydisierung ist ein zusätzlicher Viskositätsgewinn bei gleichen Betriebskosten und Investitionskosten möglich.
- Bei einer Dealdehydisierung kann dank verbesserter Temperaturführung die bessere Qualität erreicht werden.
- Bei einem Wiederaufbereitungsverfahren von PET-Flaschen kann eine Restwärmenachkondensation die Dekontamination unterstützen. Erwünscht ist hier vor allem, dass der beim Aufschmelzen im Extruder unvermeidliche Viskositätsabbau durch Hydrolyse kompensiert werden kann.
- Bei einem Wiederaufbereitungsverfahren von PET-Flaschen kann heiße und trockene Abluft aus der thermischen Behandlung für die Trocknung der Flocken vor dem Extruder genutzt werden. Diese Trocknung kann dann bereits für einen ersten Schritt zur Dekontamination genutzt werden.
- Weiterführende Granulattrocknung.
- Entfernung von Nebenprodukten.
- Entfernung von Verschmutzungen.
- Dekontamination von rezyklierten Flaschen.
- Granulattransport.

Bevorzugte Bedingungen für den IV-Aufbau ohne Qualitätseinbuße durch oxidative Schädigung sind folgende:
- Erreichen einer hohen mittleren Temperatur bei der Latentwärmegranulierung auch bei kleinem Granulatkorn, also auch bei einem großen Verhältnis Produktoberfläche zu Produktvolumen.
- Genaue Kontrolle der Schockkühlung durch Einstellung von Granulierwassertemperatur und der Kontaktzeit des Granulats mit dem Wasser
- Effiziente Abtrennung des auf dem Korn verbleibenden Oberflächenwassers und Entfernung des entstehenden Wasserdampfs.
- Zufuhr sehr trockener Luft zur thermischen Behandlung.

Die Erfindung beschreibt nun, wie die Kombination einer Latentwärmegranulierung mit einer thermischen Behandlung mit einem Gas ein Granulat bereit stellt, welches eine wesentlich höhere Viskosität als die Schmelze hat. Das Verfahren einer Restwärmenachkondensation basiert auf einer verbesserten Wasserabscheidung und Trocknung im Latentwärmegranulierprozess. Kühlung und Temperaturschwankungen durch eine unkontrollierte Wasserverdampfung hinter dem Trockner werden vermieden.

Die Hydrolyse ist weitgehend unterbunden. Ohne Wärmezufuhr und unter Nutzung der inhärenten Wärme und der Kristallisationswärme kann die thermische Behandlung auf einem genau eingestellten Temperaturniveau durchgeführt werden, die direkt unterhalb der kritischen Temperatur einer Qualitätseinbuße durch oxidativen Abbau liegt.

Eine bevorzugte Ausführungsform des erfindungsgemäßen Verfahrens sieht vor, dass das Gas oder Gasgemisch ausgewählt ist aus der Gruppe bestehend aus Stickstoff, Luft, Inertgasen und/oder Mischungen hieraus.

Das erfindungsgemäß eingesetzte Gas oder Gasgemisch, das in die Stufe b) aufgegeben wird, weist vor Aufgabe in die Konditioniereinrichtung bevorzugt einen sehr geringen Wassergehalt auf, d.h. ist sehr trocken. Der Wassergehalt kann durch den Taupunkt ausgedrückt werden, der in bevorzugten Ausführungsformen ≤ 0 °C, bevorzugt ≤ -10 °C, besonders bevorzugt ≤ -40 °C ist. Weiter bevorzugt ist es, wenn das eingesetzte Gas und/oder Gasgemisch frei von organischen Bestandteilen, wie z.B. Lösungsmitteln etc. ist. Unter "frei von" wird ein analytisch nicht mehr nachweisbarer Gehalt (z.B. ≤ 0,1 ppm) verstanden. Hierzu kann das Gas und/oder Gasgemisch z.B. mittels einer Gasaufbereitungsanlage von organischen Bestandteilen befreit und auf einen Taupunkt von weniger als -10°C getrocknet werden.

Der Gasstrom wird bevorzugt mit einer Leerrohrgeschwindigkeit in Stufe b) von 0,01 bis 0,5 m/s, bevorzugt 0,05 bis 0,15 m/s aufgegeben. Die Leerrohrgeschwindigkeit wird bestimmt, indem die leere, d.h. unbeladene Konditioniereinrichtung mit Gas durchströmt wird und die Strömungsgeschwindigkeit dieses Gasstroms (Leerrohrgeschwindigkeit) ermittelt wird.

Bevorzugte aufgegebene Gasmengen in die Konditioniereinrichtung liegen hierbei zwischen 0,05 und 1 kg, bevorzugt zwischen 0,1 und 0,5 kg Gasgemisch pro kg des eingesetzten Granulates. Diese Gasmenge wird bevorzugt pro Stunde aufgegeben. Ebenso ist es möglich, dass Gas in einem Massenverhältnis von 1:10 bis maximal 1:1 im Gegenstrom zum Granulat zu führen.

Der aus der Konditioniervorrichtung vom Granulat abgetrennte erwärmte Gasstrom kann dabei vorteilhaft zu folgenden Zwecken verwendet werden:
- Entfeuchtung des für die thermische Behandlung verwendeten Gases
- Trocknung von rezyklierten Flocken
- Granulattransport
- Entfernung von leichtflüchtigen Nebenprodukten wie Azetaldehyd aus dem Abwasser einer Polykondensationsanlage

Hierzu kann der gesamte Gasstrom, aber auch nur ein Teil des Gasstroms verwendet werden.

In einer weiteren bevorzugten Ausführungsform beträgt die Verweilzeit des Granulats in Stufe b) zwischen zwischen 4 und 20 Std., weiter bevorzugt zwischen 6 und 14 Std., besonders bevorzugt zwischen 8 und 12 Std.

Insbesondere ergeben sich besonders vorteilhafte Erhöhungen der intrinsischen Viskosität, wenn in Schritt a) ein Granulat erzeugt wird, das ein mittleres Korngewicht von 5 bis 30 mg, bevorzugt 8 bis 20 mg, besonders bevorzugt 10 bis 16 mg aufweist.

Bevorzugte Verweilzeiten des Granulats in der Kühlstrecke in Stufe a) liegen zwischen 0,1 und 2 s, bevorzugt zwischen 0,2 und 0,8 s.

Die Geschwindigkeit des Wassers in der Kühlstrecke zwischen Granulierung und Rührzentrifuge beträgt bevorzugt mehr als 4 m/s, weiter bevorzugt 8 bis 12 m/s.

Die Kerntemperaturen des in die Konditioniereinrichtung aufgegebenen Polyestergranulats müssen dabei hoch genug sein, dass die Polyesterstränge unter weiterer Polykondensation miteinander reagieren können, so dass die beobachtete Erhöhung der molekularen Masse bzw. der intrinsischen Viskosität erzielt werden kann. Bevorzugt liegt die Temperatur des Kerns des aufgegebenen Granulats dabei weit oberhalb des Glasübergangstemperaturpunktes des eingesetzten Polyestermaterials. Besonders bevorzugte Temperaturen der Granulatschüttung liegen dabei zwischen 175 und 220 °C, weiter bevorzugt zwischen 175 und 195 °C, besonders bevorzugt zwischen 180 und 190 °C.

Die Granulattemperatur kann dabei z.B. durch entsprechende Wahl mindestens eines oder einer entsprechenden Kombination mehrerer der folgenden Prozessparameter eingestellt werden:
- Kontaktzeit zwischen Granulat und Kühlwasser durch die Länge und die Geschwindigkeit des Wassers in der Kühlstrecke, wobei die Kontaktzeit weniger als 1 Sekunde, bevorzugt weniger als 0.5 Sekunden beträgt.
- Kontaktzeit zwischen Granulat und Kühlwasser in der Rührzentrifuge, gegeben durch den Rotordurchmesser und die Drehzahl der Rührzentrifuge, wobei die Kontaktzeit kleiner 1 Sekunde, bevorzugt kleiner 0.5 Sekunden ist.
- Temperatur des Kühlwassers, wobei eine Temperatur zwischen 40 und 98°C eingestellt wird, bevorzugt zwischen 75 und 90°C.
- Luftmenge, die durch die Größe und Drehzahl des Absauggebläses gegeben ist.
- Granulatgröße, wobei eine mittlere Korngröße von weniger als 20 mg, bevorzugt 8 bis 16 mg eingestellt wird. Dazu wird der Schmelzemassenstrom, die Anzahl Messer der Granulierung, die Anzahl Düsenlöcher und die Drehzahl des Schneidrotors entsprechend abgestimmt.

Vorteilhaft ist ferner, wenn zwischen Stufe a) und b) am Granulat anhaftendes Wasser mittels einer Zentrifuge durch Abschleudern entfernt wird. Die verwendete Zentrifuge kann beispielsweise als Rührzentrifuge ausgebildet sein, wobei es insbesondere von Vorteil ist, wenn die Rührzentrifuge für Wartungszwecke vom Gassystem mittels Armaturen getrennt werden kann.

Der Impuls des Wasser-Granulatgemisches wird vorteilhaft durch einen tangentialen Eintritt in die Rührzentrifuge genutzt zur schnellen Abtrennung des Wassers mittels Zentrifugalkraft.

Zur Abscheidung von übergroßen Polymerteilen aus der Granulierung ist bevorzugt vor dem Eintritt zur Rührzentrifuge eine geschlossene Kammer mit weniger als 0.5 s Verweilzeit mit Einbauten vorgesehen. Ein Teil des Wassers kann vor der Rührzentrifuge durch Öffnungen an der Kühlstrecke abgeschieden werden.

Der Durchmesser der Rührzentrifuge ist bevorzugt nach oben konisch oder abgestuft erweitert um die Zentrifugalkräfte zum Abschleudern des Restwassers zu erhöhen. Der Rührzentrifuge wird vorteilhaft über den Austrittsschacht im Gegenstrom zum Granulat heißes Gas aus der thermischen Behandlung zugeführt. In den Innenraum des Rührerhohlkörpers (Rührzentrifuge) kann zusätzlich heißes Gas aus der thermischen Behandlung zugeführt werden. Das zugeführte Gas und entstehender Dampf sowie Tropfen können mit einem Absauggebläse über das Sieb der Zentrifuge abgezogen werden. In der Abluftleitung ist bevorzugt ein Kondensator vorgesehen. Das so zurückgewonnene Granulierwasser wird in den Wasserkreislauf der Granulierung zurückgeführt.

Besonders bevorzugt insbesondere unter energetischen Aspekten ist, wenn das Gasgemisch nach Beaufschlagung des Granulats vom Granulat separiert und zur Abtrennung und/oder Vortrocknung des aus dem Kühlwasser abgetrennten Granulats in Stufe a) verwendet wird. Bei dieser Ausführungsform kann beispielsweise Luft bei Raumtemperatur in die Konditioniereinrichtung aufgegeben werden (Stufe b) und im Gegenstrom gegen die Durchlaufrichtung des Granulats durch die Konditioniereinrichtung geführt werden. Dabei erwärmt sich der Luftstrom kontinuierlich. Somit kann diese Luft zur Abtrennung des Polyestergranulats aus der Zentrifuge verwendet werden, ohne vorgeheizt werden zu müssen.

Ebenso ist es möglich, dass das Gasgemisch nach Beaufschlagung des Granulats vom Granulat separiert und zur Abtrennung und/oder Vortrocknung des aus dem Kühlwasser abgetrennten Granulats in Stufe a) verwendet wird.

Das in Schritt a) eingesetzte Polyesterrohmaterial kann beispielsweise durch vorgeschaltete Polykondensationsreaktion mindestens eines Diols mit mindestens einer Dicarbonsäure oder durch Umesterungsreaktion mindestens eines Dicarbonsäurediesters mit mindestens einem Diol hergestellt werden. Gemäß dieser Ausführungsform betrifft das Verfahren eine besonders vorteilhafte Methode zur beispielsweise kontinuierlichen Herstellung eines Polyestergranulats mit hoher intrinsischer Viskosität.

Ebenso ist es jedoch möglich, dass bereits vorgefertigtes Polyesterrohmaterial, beispielsweise in Form eines Granulates und/oder Flakes durch Aufschmelzen dem erfindungsgemäßen Prozess zugeführt wird. Dieses Aufschmelzen kann beispielsweise mittels eines Extruders erfolgen.

Das eingesetzte Polymer kann direkt in einer Polykondensationsanlage hergestellt werden oder in einem Extruder aufgeschmolzen werden, wobei es sich insbesondere um einen der folgenden Kunststoffe oder Mischungen daraus handelt:
- Polyethylenterephthalat
- mit Dicarbonsäuren oder Diolen modifiziertes Polyethylenterephthalat
- nach einer Nutzung gesammelter Abfall oder Abfall aus Produktionsanlagen, welcher für die Verwendung in neuen Produkten aufbereitet wird

Das erfindungsgemäß hergestellte Granulat kann als Endprodukt isoliert und z.B. gelagert werden. Ebenso ist es jedoch möglich, das erfindungsgemäß hergestellte Granulat nach der erfindungsgemäßen thermischen Behandlung in heißem Zustand einer Weiterverarbeitung auf einem Aufschmelzextruder zuzuführen und beispielsweise in einem formgebenden Verfahren, wie z.B. Spritzgussverfahren, Folienspritzgussverfahren oder Tiefziehen, zu entsprechenden Formkörpern weiterzuverarbeiten. Insbesondere lässt sich das Granulat dadurch zu folgenden Formkörpern verarbeiten:
- Vorformlinge für Flaschen
- Filme oder Folien
- Synthetische Fasern

Die vorliegende Erfindung wird nachfolgend weiter anhand der beigefügten Figuren sowie der nachfolgenden Ausführungen näher erläutert, ohne die Erfindung jedoch auf die dargestellten speziellen Parameter zu beschränken.

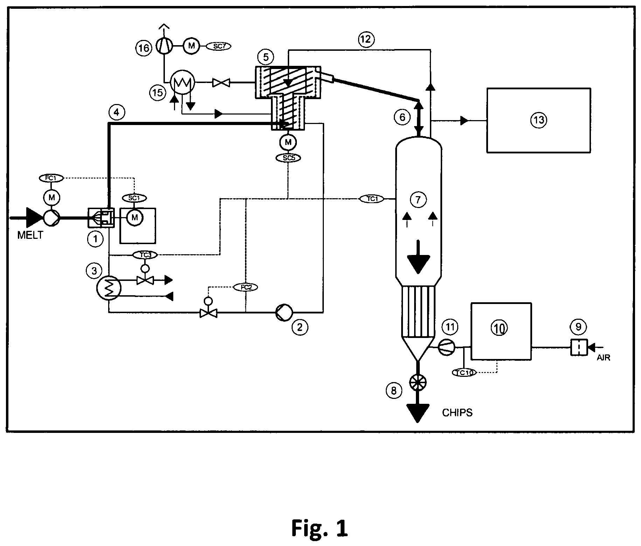

In Fig. 1 ist das Verfahren einer Restwärmenachkondensation dargestellt, bei der entfeuchtete Umgebungsluft im Gegenstrom zum Granulat geführt wird. Dank einer verbesserten Wasserabscheidung und einer kontrollierten Temperaturführung erlaubt das Verfahren einen Viskositätsanstieg von typisch 0.05 dl/g nach ASTM. In der Darstellung wird die Restwärmenachkondensation für eine Dealdehydisierung mit Luft genutzt. Damit kann die Temperatur ohne Qualitätseinbuße nahe an der Grenztemperatur zur oxidativen Schädigung des Polymers eingestellt werden. Neben dem Viskositätsanstieg wird in dem hier dargestellten verbesserten MTR®-Verfahren auch ein niedriger AA-Gehalt für das daraus hergestellte Flaschengranulat erreicht.

Das in **Fig. 1** dargestellte Verfahren besteht aus folgenden Hauptkomponenten:
(1) Unterwassergranulierung: Eine geregelte Menge Polyesterschmelze (FC1) wird über eine passende Anzahl Düsen in eine wasserdurchströmte Kammer gedrückt. Die erforderliche Zahl Messer schleift mit einer zur Schmelzemenge proportional geregelten Drehzahl über die Düsenplatte (SC1) und erzeugt so ein kugelförmiges Granulat mit einem definierten mittleren Korngewicht. Vorteilhaft ist ein kleines Korngewicht mit einem großen Verhältnis von Produktoberfläche zu Masse, weil dadurch die Dealdehydisierung, der Viskositätsaufbau oder wenn nötig eine Dekontamination schneller verlaufen. Für kleines Korn werden aber höhere Anforderungen an das Verfahren gestellt, um die in der thermischen Behandlung geforderte hohe und konstante Temperatur zu erreichen. Auch das Mitschleppen von Feuchte ist bei kleinem Granulat schwieriger zu vermeiden.
(2) Kühlwasserzirkulation: Die Menge des durch die Zirkulationspumpe (2) umgewälzten Granulierwassers wird geregelt, damit sich in der Kühlstrecke (4) die gewünschte Verweilzeit und damit die Kühlung der Schmelze einstellt: Je länger die Verweilzeit desto kleiner die Restwärme im von außen nach innen gefrierenden Korn.
(3) Temperatureinstellung des Granulierwassers: Neben der Verweilzeit in der Kühlstrecke hat die im Kühler (3) mit (TC3) geregelte Wassertemperatur einen starken Einfluss auf die verbleibende Restwärme.
(5) Rührzentrifuge -> Wasserentfernung: Neben der Verweilzeit und der Temperatur in der Kühlstrecke ist die verbleibende Kontaktzeit zwischen Wasser und Granulatkorn in der Rührzentrifuge (5) ausschlaggebend für die Restwärme, die im Granulatkorn verbleibt. Um auch für das gewünschte kleine Granulatkorn einen hohen Restwärmegehalt sicherzustellen, ist eine sehr schnelle Abtrennung des Wassers vom Korn nötig. Dies erfolgt durch einen tangentialen Eintritt in die Zentrifuge mit hoher Geschwindigkeit um das Abschleudern des Wassers ohne Verwirbelung und ohne Zeitverlust direkt am Eintritt zum Rotor sicherzustellen. Mit der regelbaren Rotordrehzahl (SC5) kann die Kontaktzeit Granulat-Wasser in der Zentrifuge optimal eingestellt werden.
(5) Rührzentrifuge -> Nachverdampfung: Das am Korn haftende Restwasser bewirkt aufgrund der Nachverdampfung eine weitere (unerwünschte) Kühlung. Der Durchmesser der Rührzentrifuge wird deshalb - wie in Anmeldung DE 10 2007 040 135.5 beschrieben - im oberen Bereich größer gewählt, um die Zentrifugalkräfte zu erhöhen.
(16) Absaugung: Feine Tropfen und Wasserdampf werden durch das Absauggebläse (16) möglichst schnell durch das Sieb der Zentrifuge abgezogen, wobei das Wasser über den Kondensator (15) weitgehend zurückgewonnen wird. Die Absaugung wird unterstützt durch heißes und trockenes Gas aus der thermischen Behandlung (12).
(6), (12) Gasführung: Der Gasstrom aus der thermischen Behandlung wird so aufgeteilt, dass der Granulatfluss nicht behindert wird. Ein Teil geht über den Granulierschacht (6) zum Austritt der Rührzentrifuge (5). Er dient der Rückführung der verbleibenden Restfeuchte, die zwischen Zentrifuge und thermischer Behandlung noch ausdampfen soll. Zusätzlich wird ein Teilstrom (12) direkt in das Zentrum der Zentrifuge (5) geleitet, um die Absaugung (16) der Brüden zu unterstützen.
(7) Thermische Behandlung: Die Temperatur der thermischen Behandlung ist durch die Restwärme im Granulat und die Kristallisationswärme gegeben. Zusammenfassung: Die Restwärme kann mit folgenden Prozessgrößen einzeln oder in Kombination miteinander kontrolliert (TC1) werden:
   - Granulatgewicht durch Schmelzemenge (FC1) und Granulatordrehzahl (SC1)
   - Kontaktzeit Wasser-Granulat durch die Wassermenge (FC2) und die Geschwindigkeit der Flotte in der Kühlstrecke (4) sowie die Drehzahl der Rührzentrifuge (SC5)
   - Granulierwassertemperatur (TC3)
   - Absaugung (SC7) mit Unterstützung der Gasströme (6) und (12)

   Mit dem Gebläse (11) wird Luft von unten nach oben durch die in einer Konditioniereinrichtung, z.B. einem Silo, von oben nach unten fließende Granulatschüttung geleitet. Dabei nimmt das Gas leichtflüchtige Nebenprodukte wie Wasser, Äthylenglykol, Azetaldehyd etc. auf. Bei einer Temperatur von vorzugsweise mehr als 175°C führt dies zu einem Viskositätsanstieg und einer Reduktion des AA-Gehalts, also zu einer Festphasennachkondensation. Mit steigender Temperatur (TC1) sind sowohl Viskositätsanstieg wie AA-Reduktion pro Zeiteinheit größer. Um Qualitätseinbußen durch oxidative Schädigung zu vermeiden, sollte vorzugsweise ab ca. 185 bis 195 °C auf einen Betrieb mit Inertgasen umgestellt werden (Skizze 3b). Gleichzeitig findet eine Dekontamination des Granulates, d.h. eine Dealdehydisierung des Granulats statt, so dass das erhaltene Produkt gleichzeitig eine erhöhte Viskosität und einen niedrigen Acetaldehydgehalt (z.B. < 1 ppm, bevorzugt < 0,5 ppm) aufweist.
(10) Entfeuchtung der Luft: Bei einer thermischen Behandlung mit Umgebungsluft soll diese gefiltert werden (9). Eine Entfeuchtung der Luft auf unter -10°C ist nötig, damit ein Abbau der Viskosität durch Hydrolyse verhindert wird. Für einen Viskositätsaufbau sollte ein Taupunkt von unter -40 ° C eingestellt werden (TC10).
(8) Weiterverarbeitung: Das Granulat kann in einem im Silo integrierten oder nachgeschalteten Kühler zum Zwecke der Verpackung auf die dafür zulässige Temperatur gekühlt werden. Polyester ist jedoch hygroskopisch und wird während des Transports wieder Feuchte aufnehmen. Daher ist die direkte Weiterverarbeitung ohne Abkühlung energetisch günstiger: In diesem Fall kann das Granulat keine Feuchte aufnehmen und unterliegt daher auch keiner Hydrolyse. So wird ermöglicht, dass das Granulat direkt in einem Extruder bei hohen Temperaturen ohne Viskositätsabbau wieder aufgeschmolzen werden kann; und somit wird eine sonst zusätzlich benötigte Trocknung vor dem Aufschmelzen vermieden.
(13) Nutzung der Abwärme: Das aus der thermischen Behandlung austretende Gas ist heiß und trocken. Der nicht für den Betrieb der Rührzentrifuge benötigte Abgasstrom kann deshalb genutzt werden. Typische Anwendungsfälle sind:
   - Wärmerückgewinnung bei der Luftentfeuchtung (10) (Regeneration).
   - Einsatz als Förderluft für pneumatische Heißtransporte.
   - Trocknung von Granulat oder Recyclingflocken.

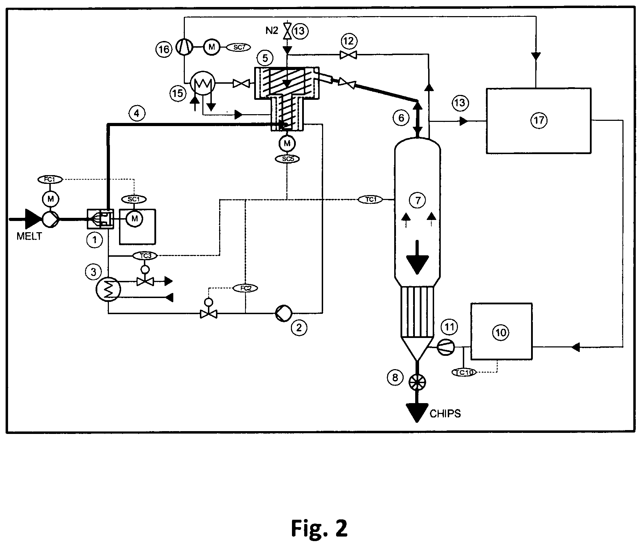

In **Fig. 2** ist das Verfahren einer Restwärmenachkondensation dargestellt, bei der ein Inertgas im Gegenstrom zum Granulat geführt wird. Die Temperatur (TC1) kann höher gefahren werden, weil der oxidative Abbau verhindert wird. Bei dieser Betriebsart muss aber das Inertgas aus Kostengründen wie in der Festphasennachkondensation üblich rezirkuliert werden. Um eine Anreicherung von organischem Material in diesem Kreislauf zu vermeiden, ist neben der Entfeuchtung (10) eine Gasreinigungsanlage (17) vorzusehen, zum Beispiel in Form einer katalytischen Verbrennung.

Die Beschreibung ist weitgehend identisch mit der thermischen Behandlung wie sie in Fig. 1 mit Umgebungsluft dargestellt ist.

Neu sind folgende Elemente:
(5) Absperrung Rührzentrifuge: In die Gaszuführungen (6) und (12) und die Absaugung (16) sind Absperrarmaturen eingebaut. Bei einem Stillstand der Rührzentrifuge kann so der Verlust an teurem Inertgas reduziert werden.
(12) Stickstoffeinspeisung: Um den Lufteintritt nach einem Unterbruch der Rührzentrifuge minimal zu halten, ist eine Spülung mit Stickstoff vorgesehen.
(17) Gasreinigung: Die aus der Restwärmenachkondensation stammenden organischen Nebenprodukte werden aus der Zirkulation entfernt.
Auch hier ist die direkte Weiterverarbeitung des heißen Granulats in einem Aufschmelzextruder oder eine Kühlung mit Zwischenlagerung und Transport möglich.

### Beispiele

Die hier dargestellten Werte zeigen Messungen aus Laborversuchen, welche den Verlauf von Viskositätsaufbau, Farbentwicklung und Dealdehydisierung bei einer thermischen Behandlung mit Luft und mit Stickstoff auf unterschiedlichen Temperaturniveaus vergleichen. Das Zwischenprodukt wurde auf Umgebungsbedingung abgekühlt.

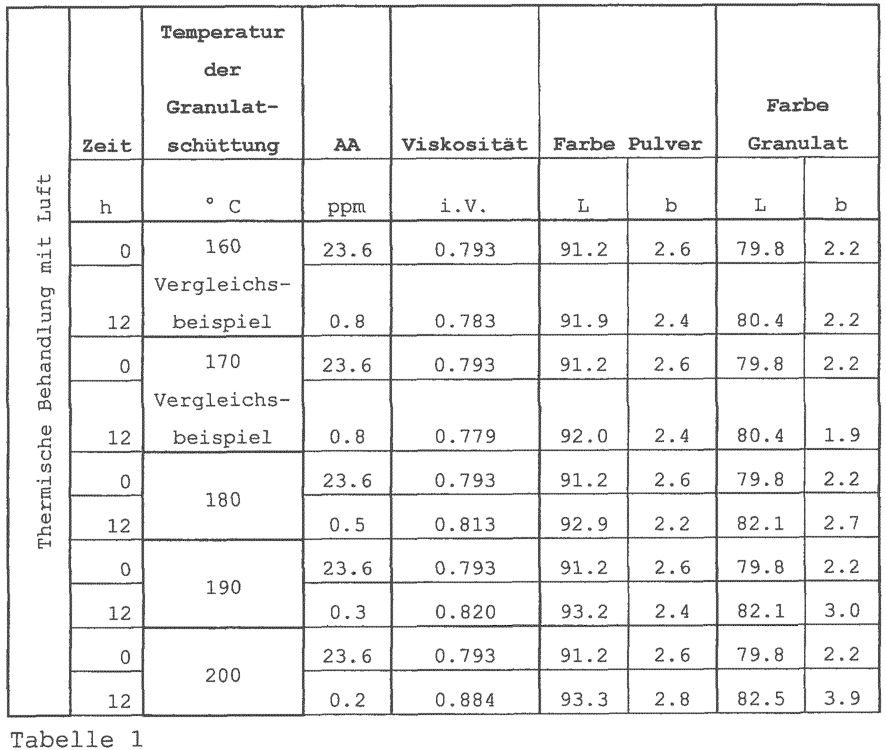

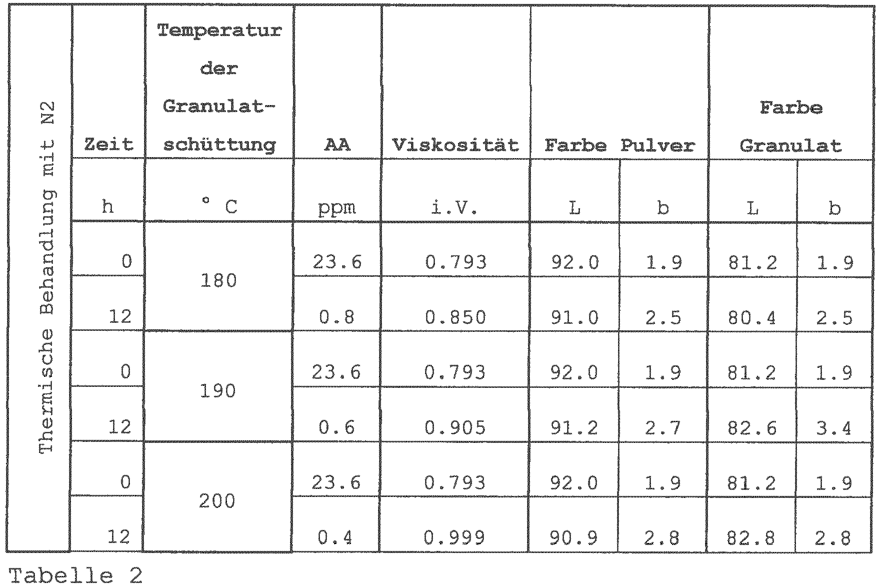

Die thermische Behandlung erfolgte im Chargenprozess mit heißer getrockneter Luft oder Stickstoff. Das Ausgangsprodukt ist identisch.

Die in einer kontinuierlichen Restwärmenachkondensation gemessenen Werte sind in der folgenden Tabelle dargestellt:

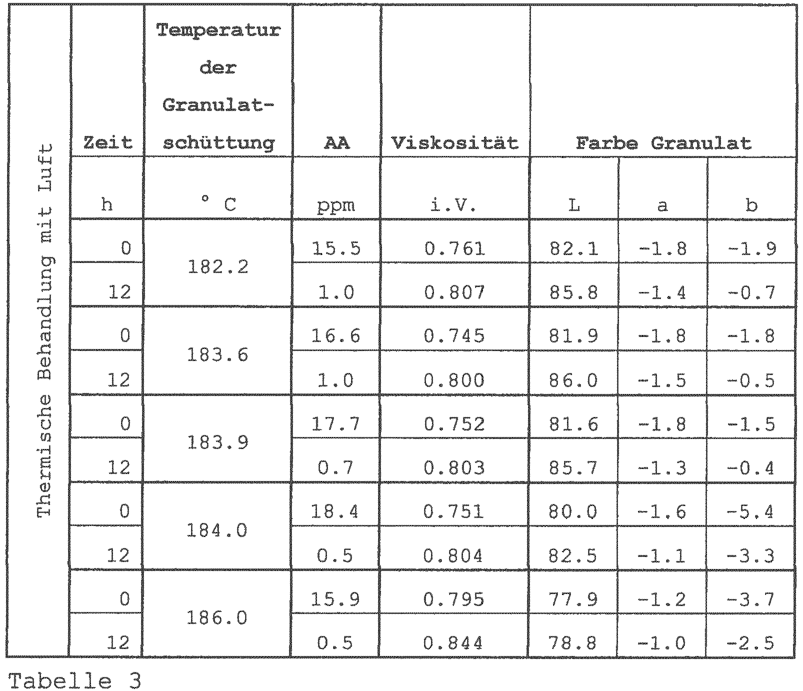

Bei diesen Messungen wurden folgende weitere Messgrößen erfasst:

| | |
|---|---|
| • Mittleres Granulatgewicht | 16 mg |
| • Verweilzeit in Kühlstrecke | 0.3 s |
| • Granulierwassertemperatur Eintritt | 72°C |
| • Taupunkt der Luft am Eintritt thermischer Behandlung | -40°C |
| • Taupunkt der Luft am Austritt der thermischer Behandlung | < -5° C |
| • Am Rohgranulat nach der Rührzentrifuge | |
| gemessene Restfeuchte | 180 ppm |

Die direkt am Austritt der Rührzentrifuge aus dem heißen Granulatstrom gezogene Probe muss unverzüglich verschlossen und gekühlt werden, weil sonst Nachverdampfung die Messwerte verfälscht.

Vergleichsmessungen bei handelsüblichen Rührzentrifugen liegen bei der Restfeuchte am Austritt höher als 500 ppm. Der Taupunkt der Luft am Austritt der thermischen Behandlung liegt über 0°C. In der ersten Stunde der thermischen Behandlung findet somit eine weitere Trocknung statt, wobei die i.V. durch Hydrolyse um 0.01 bis 0.03 g/dl abnimmt.

## Patentansprüche

1. Verfahren zur direkten Erhöhung des Molekulargewichts unter Nutzung der Restwärme bei der Herstellung eines nichtklebenden Polyestergranulates, bei dem
a) ein Polyesterrohmaterial als Schmelze durch eine Düse gepresst, in einem Kühlwasserstrom granuliert (1) und nach Durchlaufen einer Kühlwasserstrecke (4) vom Kühlwasserstrom abgetrennt wird, und
b) eine Schüttung des in Schritt a) erhaltenen Granulats in direktem Anschluss an Stufe a) einer thermischen Trocknung und Nachbehandlung durch Beaufschlagung der Granulatschüttung mit einem Gasstrom eines Gases oder Gasgemisches unterzogen wird,
wobei
während Schritt b) weder das eingesetzte Granulat noch das zugeführte Gas oder Gasgemisch des Gasstroms durch externen Energieeintrag erwärmt werden und der Gasstrom im Gegenstrom zur Führungsrichtung des Granulats in der Konditioniereinrichtung (7) geführt wird und die durchschnittliche Temperatur der Schüttung des Granulates vor Eintritt in Stufe b) auf mehr als 170 °C eingestellt wird,
**dadurch gekennzeichnet,**
**dass** die Verweilzeit des Granulats in Stufe b) zwischen 1 und 30 Std. beträgt.

2. Verfahren nach Anspruch 1, **dadurch gekennzeichnet, dass** das Gas oder Gasgemisch ausgewählt ist aus der Gruppe bestehend aus Stickstoff, Luft, Inertgasen und/oder Mischungen hieraus.

3. Verfahren nach einem der vorhergehenden Ansprüche, **dadurch gekennzeichnet, dass** das Gas oder Gasgemisch vor der Beaufschlagung einen Taupunkt von ≤ 0 °C, aufweist.

4. Verfahren nach einem der vorhergehenden Ansprüche, **dadurch gekennzeichnet, dass**
a) die Strömungsgeschwindigkeit des Gasstroms in Stufe b) 0,01 bis 0,5 m/s beträgt und/oder
b) zwischen 0,05 und 1 kg, Gasgemisch pro kg des eingesetzten Granulates bei der Beaufschlagung in Stufe b) verwendet werden.

5. Verfahren nach einem der vorhergehenden Ansprüche, **dadurch gekennzeichnet, dass** das in Schritt a) erzeugte Granulat auf ein mittleres Korngewicht von 5 bis 30 mg granuliert wird.

6. Verfahren nach einem der vorhergehenden Ansprüche, **dadurch gekennzeichnet, dass** die Verweilzeit des Granulats in der Kühlstrecke (4) in Stufe a) zwischen 0,1 und 2 s beträgt.

7. Verfahren nach einem der vorhergehenden Ansprüche, **dadurch gekennzeichnet, dass** die durchschnittliche Temperatur der Granulatschüttung vor Eintritt in Stufe b) auf Temperaturen zwischen 175 und 220 °C eingestellt wird.

8. Verfahren nach einem der vorhergehenden Ansprüche, **dadurch gekennzeichnet, dass** das Kühlwasser in Stufe a) eine Temperatur zwischen 40 und 98 °C aufweist.

9. Verfahren nach einem der vorhergehenden Ansprüche, **dadurch gekennzeichnet, dass** zwischen Stufe a) und b) am Granulat anhaftendes Wasser mittels einer Zentrifuge (5) durch Abschleudern entfernt wird.

10. Verfahren nach einem der vorhergehenden Ansprüche, **dadurch gekennzeichnet, dass** das Gasgemisch nach Beaufschlagung des Granulats vom Granulat separiert und zur Abtrennung und/oder Vortrocknung des aus dem Kühlwasser abgetrennten Granulats in Stufe a) verwendet wird.

11. Verfahren nach einem der vorhergehenden Ansprüche, **dadurch gekennzeichnet, dass** der von Stufe b) abgetrennte Gasstrom in zwei Teilströme aufgeteilt wird, wobei ein Teilstrom im Gegenstrom mit dem von Stufe a) zur Stufe b) geführten Granulat kontaktiert wird und der zweite Teilstrom in eine Zentrifuge (5) geleitet wird, die zur Abtrennung des Granulats vom Kühlwasser in Stufe a) verwendet wird.

12. Verfahren nach einem der vorhergehenden Ansprüche, **dadurch gekennzeichnet, dass** das in Schritt a) eingesetzte Polyesterrohmaterial durch vorgeschaltete Polykondensationsreaktion mindestens eines Diols mit mindestens einer Dicarbonsäure oder durch Umesterungsreaktion mindestens eines Dicarbonsäurediesters mit mindestens einem Diol hergestellt wird, oder durch Aufschmelzen eines Polyesterrohmaterials erhalten wurde.

## Claims

1. A method for directly increasing the molecular weight using residual heat in the production of a non-sticky polyester granulate, in which
a) a polyester raw material is pressed as a melt through a nozzle, granulated in a stream of cooling water (1) and after passing through a cooling-water zone (4) separated off from the stream of cooling water, and
b) a bed of the granulate obtained in step a), directly following stage a), is subjected to thermal drying and post-treatment by applying a gas stream of a gas or gas mixture to the granulate bed,
wherein
during step b) neither the granulate used nor the gas or gas mixture of the gas stream supplied are heated by external energy input, and the gas stream is guided in a countercurrent flow to the direction of guidance of the granulate in the conditioning device (7) and the average temperature of the bed of granulate before entering stage b) is set to more than 170°C,
**characterised in that**
the residence time of the granulate in stage b) is between 1 and 30 hours.

2. A method according to claim 1, **characterised in that** the gas or gas mixture is selected from the group consisting of nitrogen, air, inert gases and/or mixtures thereof.

3. A method according to one of the preceding claims, **characterised in that** the gas or gas mixture prior to the application has a dewpoint of ≤ 0°C.

4. A method according to one of the preceding claims, **characterised in that**
a) the flow rate of the gas stream in stage b) is 0.01 to 0.5 m/s and/or
b) between 0.05 and 1 kg gas mixture per kg of the granulate used upon the application in stage b) are used.

5. A method according to one of the preceding claims, **characterised in that** the granulate produced in step a) is granulated to a mean grain weight of 5 to 30 mg.

6. A method according to one of the preceding claims, **characterised in that** the residence time of the granulate in the cooling zone (4) in stage a) is between 0.1 and 2 s.

7. A method according to one of the preceding claims, **characterised in that** the average temperature of the granulate bed before entry into stage b) is set to temperatures of between 175 and 220°C.

8. A method according to one of the preceding claims, **characterised in that** the cooling water in stage a) is at a temperature of between 40 and 98°C.

9. A method according to one of the preceding claims, **characterised in that** between stage a) and b) water adhering to the granulate is removed by centrifugation by means of a centrifuge (5).

10. A method according to one of the preceding claims, **characterised in that** the gas mixture after application to the granulate is separated from the granulate and is used in stage a) for separation and/or preliminary drying of the granulate separated off from the cooling water.

11. A method according to one of the preceding claims, **characterised in that** the gas stream separated off from stage b) is divided into two partial streams, one partial stream being contacted in a countercurrent flow with the granulate carried from stage a) to stage b) and the second partial stream being passed into a centrifuge (5) which is used for separating off the granulate from the cooling water in stage a).

12. A method according to one of the preceding claims, **characterised in that** the polyester raw material used in step a) is produced by upstream polycondensation reaction of at least one diol with at least one dicarboxylic acid or by re-esterification reaction of at least one dicarboxylic acid diester with at least one diol, or was obtained by melting a polyester raw material.

## Revendications

1. Procédé pour augmenter directement la masse moléculaire par utilisation de la chaleur résiduelle lors de la fabrication d'un granulé de polyester non adhésif, dans lequel
a) on fait passer sous pression une matière première de polyester sous forme d'une masse fondue à travers une buse, on la granule (1) dans un courant d'eau de refroidissement et on la sépare du courant d'eau de refroidissement après son passage dans un bain d'eau de refroidissement (4), et
b) on soumet une masse en vrac du granulé obtenu dans l'étape a), immédiatement après l'étage a), à un séchage thermique et à un post-traitement, par application d'un courant gazeux d'un gaz ou d'un mélange gazeux à la masse en vrac du granulé,
dans lequel
pendant l'étape b), on ne chauffe grâce à un apport d'énergie extérieur ni les granulés utilisés, ni le gaz ou le mélange gazeux du courant gazeux amené, et on envoie le courant gazeux dans le dispositif de conditionnement (7) à contre-courant par rapport à la direction de guidage du granulé, et on ajuste à une valeur supérieure à 170°C la température moyenne de la masse en vrac du granulé avant son entrée dans l'étage b),
**caractérisé en ce que** le temps de séjour du granulé dans l'étage b) est compris entre 1 et 30 heures.

2. Procédé selon la revendication 1, **caractérisé en ce que** le gaz ou le mélange gazeux est choisi dans le groupe consistant en l'azote, l'air, les gaz inertes et/ou les mélanges de ceux-ci.

3. Procédé selon l'une des revendications précédentes, **caractérisé en ce que** le gaz ou le mélange gazeux présente, avant l'application, un point de rosée ≤ 0°C.

4. Procédé selon l'une des revendications précédentes, **caractérisé en ce que**
a) la vitesse d'écoulement du courant gazeux dans l'étage b) est de 0,01 à 0,5 m/s, et/ou
b) on utilise lors de l'application dans l'étage b) de 0,05 à 1 kg du mélange gazeux par kg du granulé utilisé.

5. Procédé selon l'une des revendications précédentes, **caractérisé en ce que** le granulé produit dans l'étape a) est granulé jusqu'à une masse moyenne de grain de 5 à 30 mg.

6. Procédé selon l'une des revendications précédentes, **caractérisé en ce que** le temps de séjour du granulé dans le bain de refroidissement (4) de l'étage a) est de 0,1 à 2 s.

7. Procédé selon l'une des revendications précédentes, **caractérisé en ce que** la température moyenne de la masse en vrac du granulé est, avant son entrée dans l'étage b), ajustée à des températures comprises entre 175 et 220°C.

8. Procédé selon l'une des revendications précédentes, **caractérisé en ce que** l'eau de refroidissement de l'étage a) présente une température comprise entre 40 et 98°C.

9. Procédé selon l'une des revendications précédentes, **caractérisé en ce que** l'eau qui adhère au granulé entre l'étage a) et l'étage b) est éliminée à l'aide d'une centrifugeuse (5) par centrifugation.

10. Procédé selon l'une des revendications précédentes, **caractérisé en ce que** le mélange gazeux, après avoir été appliqué au granulé, est séparé du granulé et est utilisé pour la séparation et/ou le pré-séchage du granulé séparé dans l'étage a) de l'eau de refroidissement.

11. Procédé selon l'une des revendications précédentes, **caractérisé en ce que** le courant gazeux séparé de l'étage b) est subdivisé en deux courants partiels, un courant partiel étant mis en contact à contre-courant avec le granulé envoyé de l'étage a) à l'étage b), et le deuxième courant partiel étant envoyé dans une centrifugeuse (5), qui est utilisée pour séparer le granulé de l'eau de refroidissement dans l'étage a).

12. Procédé selon l'une des revendications précédentes, **caractérisé en ce que** la matière première de polyester utilisée dans l'étape a) a été préparée par une réaction préalable de polycondensation d'au moins un diol avec au moins un acide dicarboxylique ou par une réaction de transestérification d'au moins un diester d'acide dicarboxylique avec au moins un diol, ou a été obtenue par fusion d'une matière première de polyester.
